# EUROPEAN PATENT APPLICATION

(11) **EP 1 975 812 A1**
(43) Date of publication of application: **01.10.2008**
(21) Application number: 06840760.0
(22) Date of filing: 30.12.2006
(51) Int. Cl.: G06F 17/30

(54) **GENERATING METHOD OF COMPUTER FORMAT DOCUMENT AND OPENING METHOD**

(30) Priority: 31.12.2005 CN 200510137834
(71) Applicant: Wuxi Evermore Software, Inc, Wuxi City, Jiangsu Province 214028 (CN)
(72) Inventor: CHEN, Jie, Jiangsu 214028 (CN)
(74) Representative: Price, Nigel John King
(86) International application number: PCT/CN2006/003730
(87) International publication number: WO 2007/076717

(57) **Abstract**

The present invention relates to a method for generating and opening computer forme file. The method for generating the computer forme file includes the following steps. A content of the printer spool file of the word processing document under the current environment is transformed into a picture; forme file information which describes correlative information including a picture quantity, a picture format and a storage position is generated; said picture and said forme file information are encapsulated into a forme file. This method provides two kinds of the generating modes, including: the forme file storing only the picture and the forme file storing the document data and the picture. The method for opening the computer forme file includes the following steps. The information of the document head is read in; the total number of pages of the document is obtained; the picture in the forme file is read in and displayed according to parsing said information of the document head and the total number of pages of the document. This method provides two kinds of the opening modes, including: opening the forme file in the read-only manner and in the editing manner. Said forme file has the practical functions, for example searching the content, looking up and locating the page number, editing or consulting the content and so on.

## Description

### FIELD OF THE INVENTION

The present invention relates to a method for processing computer word processor files more particularly, to a method for generating and opening computer forme files.

### BACKGROUND OF THE INVENTION

The software of word processor, as a tool for word edit, table processing and graphic mixed character typesetting has found broad application in governments, corporations and personal office. In some application occasions, for example, when the government makes and publishes official documents, the documents made by the different typesetting mechanism of the different software or the same software are to be produced different display and print effect sometimes. Even if the documents are made by using the same software and typesetting mechanism, when they are exported on the different printer, the print result may be also different sometimes.

The reason which results in the above problems is that the software of word processor applies different manners to process objects of the words, graphics, tables and so on. The words are arranged word for word according to a stream-oriented irrigation and drainage method. The objects of the graphics are located in accordance with the different typesetting manners. Some of the graphics are located in accordance with the horizontal distance and the vertical distance to the page margin. Some of the graphics are located comparatively to the paragraph in accordance with the anchor point of the paragraph in which the graphics are located. The tables are also the same as the graphics. The word processor is greatly complexity to the process of the words arrangement. The factors which directly influence the effects of the words arrangement are as follows.

1. Punctuation: For the punctuations process, in order to arrange the words and punctuations more harmonious, the punctuations are often compressed. The way of the compression ratio of the different positions and the different punctuations, such as the customs of prepositive punctuations, postpositive punctuations, processing the punctuations in Chinese and so on, are diverse from each other.

2. Character: Appearances of the different characters in a view display are diverse from each other, in particular the English characters. The character width of the Chinese characters generally is equal, but English characters are not, for example, the width disparity between the letter "I" and the letter "W" is very large and the width rests with the design of their type font.

3. Font: Appearances of the same characters in the different type fonts in a view display are diverse from each other, for example, "Song typeface" and "regular script" display diversely from each other.

4. Line breaking regulation: The line breaking regulations of English words and Chinese characters are diverse from each other.

5. Character spacing: The spaces between the characters are diverse from each other because of the different characters. The spaces between them which are English characters and English characters, English characters and Chinese characters and English characters and numbers and so on are diverse from each other.

6. Row spacing: The row spacing is represented in a vertical direction. The row spacing is affected by the factors including paragraph spacing, spacing before paragraphs, spacing behind paragraphs, character height, character position and so on.

7. Grid setting: The grids are sometimes utilized as an assistant tool for object locating to facilitate object alignment, and the grids also influence characters locating directly.

8. Vertical typeset: Because of the differences of regulation, rule and direction of the vertical typeset, the view displays are different.

9. Drivers of the different printer are also different that result in the different outcome printing out.

Other factors, such as different operating systems, different circumstance setting (such as resolution, the size of the system font and so on) and so on also influence the character position confirming. Furthermore, the function of the software of Word Process is from strength to strength along with incessantly upgrading of the edition. Some new functions are to product direct or indirect effect to the arrangement of the entire chapter of the document on the horizontal and vertical aspect, or on the object locating. Or typesetting arithmetic has changed which results in the different typesetting result, and sometimes results in not only certain difference on the display format effect but also larger difference on the print output effect after the document made by old edition is opened by the new edition.

The above technical disadvantage that it cannot be always insured that the format and the print result of the document keep consistent brings difficulty to deeper applications of the software of Word Process. For example, law file which is requested the same print effect in any case has strict requirements including inalterability, consistency, format aesthetic property and so on. By all appearances, the prior art cannot satisfy these requirements. Thus the prior art is faced with two aspects of the technical problems. One is how the software of Word Process cannot be affected by the edition when it stores the document, and the document is stored into the forme file in which the format is always kept consistent. The other is how the print output format can fully keep consistent when the software of Word Process of different editions opens the forme files.

### SUMMARY OF THE INVENTION

The first object of the present invention is to provide a method for generating the computer forme file. The content of the printer spool file of a word processing document under the current environment is stored in the form of picture format, so as to keep the display and the print effect of the generated forme file consistent both in the different operating system and different environment configuration. The further object is to make the generated forme file be provided with the practical functions, for example searching the content , looking up and locating the page number, editing or consulting and so on, meanwhile to reduce the storage space of said forme file furthest.

The second object of the present invention is to provide a method for opening the computer forme file. It is ensured that said forme file is provided with the same display and print effect by reading and displaying the pictures stored in the forme file. The further object is to make the opened forme file be provided with the practical functions, for example searching the content, looking up and locating the page number, editing or consulting the content and so on, and to edit the original file sequentially according to the instructions opened with the editing manner.

In order to accomplish the first object of the present invention, the present invention provides a method for generating the computer forme file. The method includes the following steps:

Step A20, a content of the printer spool file of the word processing document under the current environment is transformed into a picture;

Step A30, forme file information which describes correlative information including the quantity, the format and the storage position of the picture is generated; and

Step A40, said picture and said forme file information are encapsulated into a forme file.

Concretely, step A20 may be that the each page of contents of the printer spool file of the word processing document under the current environment is transformed into each corresponding page of pictures, and also may be that the entire content of the printer spool file of the word processing document under the current environment is transformed into one corresponding picture. Preferably, said picture may be stored in the form of multicolor, black and white, grey scale or watermark by compression processing and/or setting the display parameters of the picture. Said forme file information includes file head information which stores the correlating information including the size, the format, the identification and the storage position of the picture, and information of the total number of pages which reflects the size of the forme file.

In the above technical solution, it may include a step of counting the total number of pages of the word processing document, so as to generate said information of the total number of pages rapidly; it may also include a step of setting an attribute description area of the forme file, and meanwhile storing the word content for searching the content of the forme file in said attribute description area in the form of plain text. Further, it may include a step of setting a zoom out image description area of the forme file, and meanwhile transforming said picture into each page of zoom out images for searching the page number of the forme file and is stored in said zoom out image description area; it may also include a step of encapsulating and storing a reader of the forme file capable of being embedded in the web pages to run. Still further, it may even include a step of storing a data content of said word processing document as a document data of the forme file.

In order to accomplish the second object of the present invention, the present invention provides a method for opening the computer forme file. The method includes the following steps.

Step B 10, file head information of the forme file is read in;

Step B20, the total number of pages of the file is obtained; and

Step B30, a picture in a forme file is read in and displayed through parsing said file head information and the total number of pages of the file.

Said step B30 may include a step of performing a decompression processing to said picture, and may also include a step of setting the display parameters of said picture so as to make said picture display in the form of multicolor, black and white, grey scale or watermark.

In the above technical solution, it may include a step of reading in each page of zoom out images in a zoom out image description area of said forme file for searching the page number, and may also include a step of detecting whether a reader of the forme file is appended in the forme file. Said reader of the forme file can run if it is appended, and the picture in said forme file is loaded into said reader of the forme file. Further, it may also include a step of detecting whether a document data of the forme file is stored in the forme file. If yes, the instructions of the forme file can be opened in the editing manner, and the following steps are executed:

Step C30, a blank word processing document is newly built;

Step C40, the document data of the forme file is read in; and

Step C50, said document data is inputted into the word processing document and is performed an arrangement and a typesetting.

The technical thought of a method for generating the computer forme file and for opening the computer forme file in the present invention is that a picture is a display format which is a fixed format and cannot be edited, its display and print effect always keep consistent in the different operating system and different environment configuration. The present invention utilizes skillfully this characteristic of the picture format, and stores the content of the printer spool file of the word processing document under the current environment in the picture format. Consequently, the forme file of which the display and print effect are always consistent is generated. At the same time, it can be made that the forme file is provided with the same display and print effect when it is opened in the different operating system and different environment configuration by reading and displaying the picture in the forme file.

The method for generating the computer forme file in the present invention utilizes the characteristic that the display and print effect of the picture format always keep consistent in the different operating system and different environment configuration to store the content of the printer spool file of the word processing document under the current environment in the picture format skillfully. The present invention simply and effectively provides a method for generating the forme file which can implement always keeping the format of the word processing document consistent. The technical solution of the present invention provides two modes for generating the forme file.

Generating mode 1, the generated forme file is stored only as the picture. Said forme file stores the picture, which can insure the consistent format effect.

Generating mode 2, the generated forme file are stored as the document data and the picture. Said forme file stores either the document data or the picture, and the different opening instructions which can open the document data and the picture respectively are set for the forme file generated by this generating mode.

The generating procedure of the forme file may include the procedure of storing the word content of the plain text in the attribute of the forme file, and may include the procedure of storing each page of the zoom out images, which implements the extending of the practical functions, for example searching the content of the forme file, looking up and locating the page number of the forme file, editing or consulting the content of the forme file and so on. The reader of the forme file capable of being embedded in the web pages to run is stored at the same time while said forme file is generated. The forme file of which the display effect is fully consistent can be issued to the Internet using the forme file generated by the method of the present invention and combining with the reader of the forme file. Therefore, the present invention provides a super-excellence method for issuing the forme file to the Internet. Furthermore, in the generating procedure of the forme file in the present invention, it adopts that the compression processing is performed to said picture and/or the display parameters is set to reduce furthest the storage space of the forme file.

The method for opening the computer forme file in the present invention provides simply and effectively an opening method which makes the forme file be provided with the same display and print effect through using the picture which is read in successively stored in the forme file and the characteristic that the display and print effect of the picture format always keep consistent in the different operating system and different environment configuration. The technical solution of the present invention provides two opening modes:

Opening mode 1, the forme file is opened in the read-only manner. The opening mode only read in the picture in the forme file. After the forme file is opened, the content of the forme file can only be consulted but can not be edited. But the forme file can be inserted the content including a digital signature, an electronic seal or a postil and so on.

Opening mode 2, the forme file is opened in the editing manner. The opening mode only read in the document data of the forme file. Said document data is irrigated into the document according to the standard typeset flow and is performed a typesetting and displays the content. The users can edit the word or the object discretionarily.

The method for opening the forme file may include the procedure of reading in the content of the plain text stored in the attribute of the forme file, and also include the procedure of reading in each page of the zoom out images of the forme file. The method implements the practical functions, for example searching the content, looking up and locating the page number, editing or consulting the content and so on after opening the forme file. When said forme file is opened, whether the reader of the forme file is appended in the forme file is detected. If yes, said reader of the forme file can run and the picture in said forme file is loaded into said reader of the forme file. The present invention can open the forme file of which the display effect is fully consistent under the web page environment by using said reader of the forme file so as to make the present invention be provided with the function for opening the forme file in the Internet.

Furthermore, in the generating procedure, the forme file of the present invention adopts the step of performing the compression processing and/or setting the display parameters of said picture, so that said picture may be stored in the form of multicolor, black and white, grey scale or watermark. In the opening procedure, it adopts the step of performing the decompression processing to said picture and/or setting the display parameters to satisfy all kinds of the different requirements of the different users.

The technical solution of the present invention will be described by the further detailed description through the following drawings and embodiments.

### BRIEF DESCRIPTION OF THE DRAWINGS

Fig. 1 is a flowchart of a method for generating the computer forme file in accordance with the present invention;

Fig.2 is a flowchart of generating mode one in a method for generating the computer forme file in accordance with the present invention;

Fig.3 is a flowchart of generating mode two in a method for generating the computer forme file in accordance with the present invention;

Fig.4 is a flowchart of pre-storing pictures in the forme file in accordance with the present invention;

Fig. 5 is a flowchart of a method for opening the computer forme file in accordance with the present invention;

Fig.6 is a flowchart of opening mode one in a method for opening the computer forme file in accordance with the present invention; and

Fig.7 is a flowchart of opening mode two in a method for opening the computer forme file in accordance with the present invention.

### DETAILED DESCRIPTION OF THE PREFERRED EMBODIMENTS

In order to describe the technical solutions of the present invention more clearly, the correlative glossaries related with the present invention are to be explained hereinafter.

General file: the general file is a file format stored acquiescently by the software of Word Process. For example, the file format stored acquiescently by the Microsoft Word is *.doc, or the file formats are stored by other software of Word Process.

Forme file: the forme file is an especial file printed uniformly in the software of Word Process. Under different software and hardware environment, this file can always keep the printing effect consistent. In ordinary circumstances, the display effect of the file is also consistent after opening this file by using the Word Process. The original content cannot be edited, but the content including digital signature, electronic seal or postil and so on can be inserted.

Editable forme file: the editable forme file is a word processing file storing both the format and the original data. The original content can be edited continuously after the file is opened and the format data is updated automatically when the file is stored.

Forme file of which the content can be searched: based on the forme file, the file is stored, and the plain text content of the full text is stored in the file attribute to perform the full text searching to the forme file conveniently at the same time.

Zoom out image: the content displayed in page is reduced and displayed as a picture which is convenient for consulting fast and locating the page number.

Printer spool file: the printer spool file is a temporary file generated by the operating system in the computer when the software of Word Process prints the word processing document, and the printed file is copied into the temporary file by using a special enhanced metafile format. The software of Word Process may send the printer spool file to the printer at the background after the printer spool file is created. Therefore, the printer spool file is a printed result in the specific environment including software and hardware and setting.

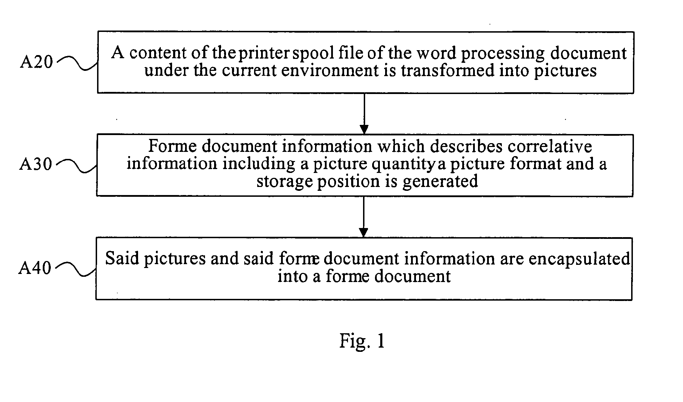

Fig.1 is a flowchart of the method for generating the computer forme file in accordance with the present invention, which includes the following steps:

Step A20, a content of the printer spool file of the word processing document under the current environment is transformed into a picture;

Step A30, forme file information which describes correlative information including the quantity, the format and the storage position of the picture is generated; and

Step A40, said picture and said forme file information are encapsulated into a forme file.

The present invention utilizes skillfully the characteristic that the display and print effect of the picture format always keep consistent in the different operating system and the different environment configuration, and the content of the printer spool file of the word processing document under the current environment is transformed into the picture to be stored. The present invention provides a method for generating the computer forme file simply and efficiently. Said picture may be each page of pictures which is transformed from the each page of contents of the printer spool file of the word processing document under the current environment, and also may be one picture which is transformed from the entire content of the printer spool file of the word processing document under the current environment. The latter is a special required process method which can insure the format of the word processing document being absolutely exact. All of the technologies related in said step 20 are the prior art. It only needs to ensure the format being credible and the information being comprehensive.

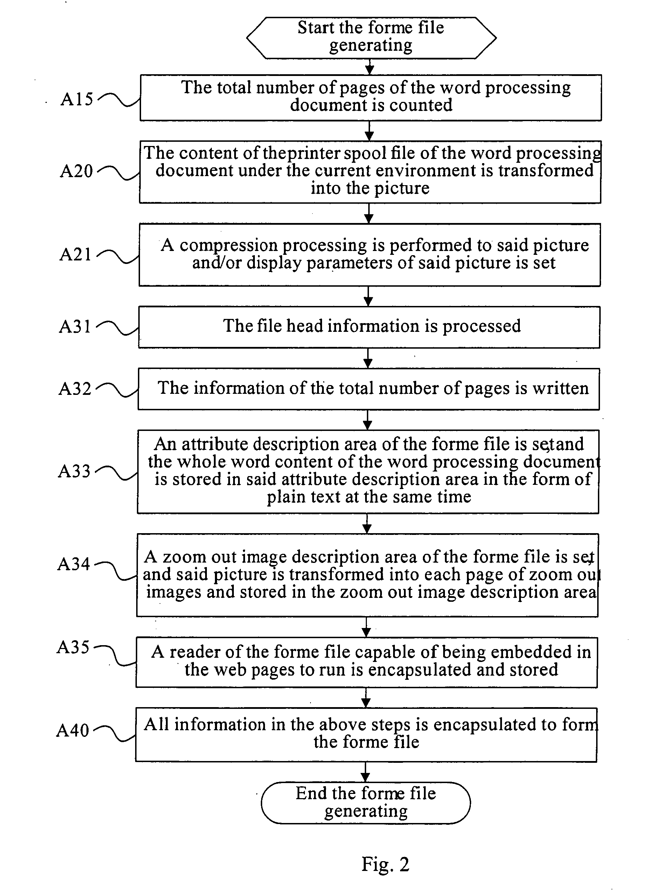

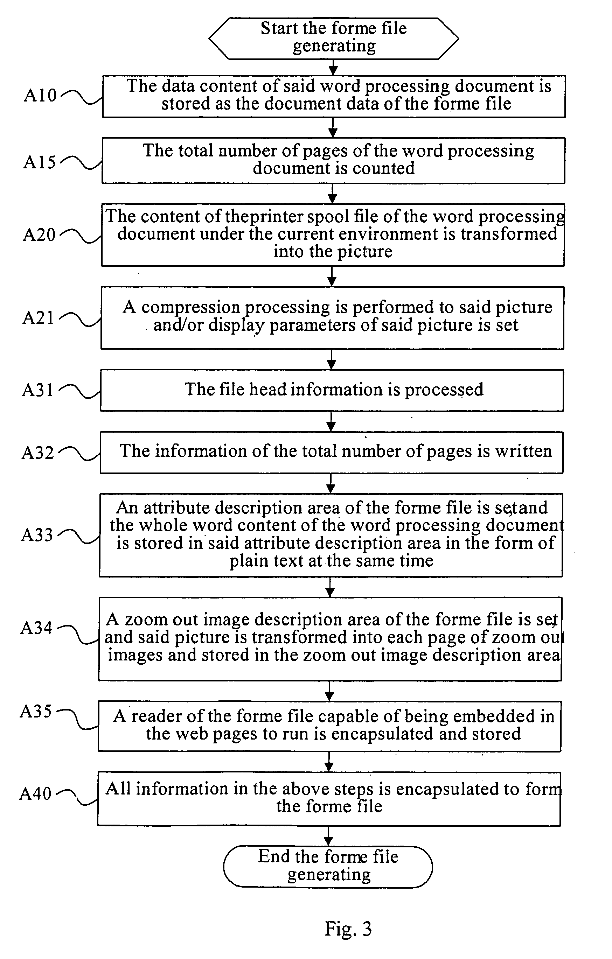

The present invention includes two technical solutions for generating the forme file. The generating mode one is only to store the forme file as the picture, and the generating mode two is to store a document data and the forme file of the picture. Fig.2 and Fig.3 show the concrete process flow of the two generating modes respectively.

Fig.2 is a flowchart of the generating mode one in the method for generating the computer forme file in accordance with the present invention, which concretely includes the following steps:

Step A15, the total number of pages of the word processing document is counted;

Step A20, the content of the printer spool file of the word processing document under the current environment is transformed into the picture;

Step A21, a compression processing is performed to said picture and/or display parameters of said picture is set;

Step A31, the file head information is processed;

Step A32, the information of the total number of pages is written;

Step A33, an attribute description area of the forme file is set, and the whole word content of the word processing document is stored in said attribute description area in the form of plain text at the same time;

Step A34, a zoom out image description area of the forme file is set, and said picture is transformed into each page of zoom out images and stored in the zoom out image description area;

Step A35, a reader of the forme file capable of being embedded in the web pages to run is encapsulated and stored; and

Step A40, all information in the above steps is encapsulated to form the forme file.

In the preferred technical solution of the present invention as shown in Fig.2, the step A15 of counting the total number of pages of the word processing document is included before the step A20, so that the technical solution can pre-set the transform times and storage position of said picture in accordance with said information of the total number of pages, can program the size of said forme file primarily and can quicken the process rate of the subsequent steps. Forme file information in the step A30 includes the head file information and the information of the total number of pages. The correlating information, such as the size, the format, the identification and the storage position of said picture and so on, is stored in said file head information. The information of the total number of pages is the correlating information reflecting the size of the forme file.

In the preferred technical solution of the present invention as shown in Fig.2, the compression processing is performed to said picture and/or display parameters of said picture is set in the step A21, so that said picture may be stored in the form of multicolor, black and white, grey scale or watermark, which can reduce the storage space of said picture effectively. Said step A21 may be that:

(A) The compression processing is performed to said picture by using compression arithmetic;

(B) The resolution is reduced, the resolution of the picture for screen display is reduced to 96dpi, and the resolution of the picture for printing is reduced to 200dpi;

(C) The picture color display mode is changed and the effect selections, such as multicolor, black and white, grey scale, watermark and so on, are provided. Obviously, compared to the color display, the black and white display economizes the storage space.

Through the step A21, the present invention stores the corresponding formal picture according to different kinds of requirements and reduces effectively the capacity of the picture so as to reduce furthest the storage space of the forme file.

In the preferred technical solution of the present invention as shown in Fig.2, more information may be appended in said forme file to further extend functions of the forme file by the step of appending correlative content in said forme file, so that the users browse and lookup the format and content of the forme file conveniently and rapidly. The step A33 is that an attribute description area of the forme file is set and the whole word content of the word processing document is stored in said attribute description area in the form of plain text. Specifically speaking, said word content is stored in a field "remark" of the forme file attribute to convenient for the users to search the content. The step A34 is that a zoom out image description area of the forme file is set and each page of zoom out images formed by using said picture is stored in the zoom out image description area. The users can look up and locate the page number of the forme file conveniently and rapidly by each page of the zoom out images. The step A35 is that a reader of the forme file is stored while the forme file is generated. Said reader of the forme file is picture browser which can directly open the forme file generated by the present invention. More importantly, said reader of the forme file is capable of being embedded into the web pages to run to make the forme file generated by the present invention be provided with the function of running under the web page environment. The reader of the forme file provides a super-excellence method for issuing the forme file to the Internet and extends the application field of the present invention.

The conventional method for issuing information by the Internet is generally that the word processing document is stored as a web page (Html) file, but the format of the generated web page file is sometimes different from the original format in the software of Word Process. For the application occasion, such as official documents, which strictly requires consistent format, the authority of the official documents and the seriousness on the law is lost and the requests cannot be satisfied fully. The reader of the forme file of the present invention is capable of being embedded into the web page to run. The forme file of which the display effect is fully consistent can be issued to the Internet by using the forme file generated by the method of the present invention and combining with the reader of the forme file.

Apparently, the above steps A33, A34 and A35 have certain independence. They can either exist separately, or join in the processing flow with any combination and any order.

Through the processing of the steps of A15-A40, the picture and the necessary forme file information have been stored in the generated forme file to insure the format effect being consistent when displaying and printing. Because the forme file with this storage mode stores the picture only, the forme file can only be opened in the read-only manner for browsing and consulting without editing the display content, but can be inserted the content including digital signature, electronic seal or postil and so on.

Fig.3 is a flowchart of generating mode two in the method for generating the computer forme file in accordance with the present invention, which adds a step A10 in the technical solution as shown in Fig.2.

Step A10, the data content of said word processing document is stored as the document data of the forme file.

The preferred technical solution of the present invention as shown in Fig.3 makes the present invention be provided with the broader application value, provide a plurality of usage modes for the users, and satisfy the increasing developmental individual requirement. The technical solution as shown in Fig.3 generates a forme file saving the data content and the picture. The forme file stores either the data or the format, and sets the different opening instructions which can open the document data or the picture respectively to the forme file generated by the generating mode. If the forme file is opened in the way of opening the document data, the forme file is opened in the edited mode and the users can typeset and edit. If the forme file is opened in the way of opening the format, the forme file is opened in the read-only manner and the users cannot edit the format content. Apparently, the technical solution as shown in Fig.3 not only implements the invention object of the consistent formats, but also has an extending function that the forme file can be edited.

Through the processing of the steps A10-A40 as shown in Fig.3, in the generated forme file, not only the picture and the necessary file information are stored, but also the data content is stored. Not only the consistent format effect is insured, but also the function for opening the forme file in the editing manner is provided and the users can implement typesetting and editing.

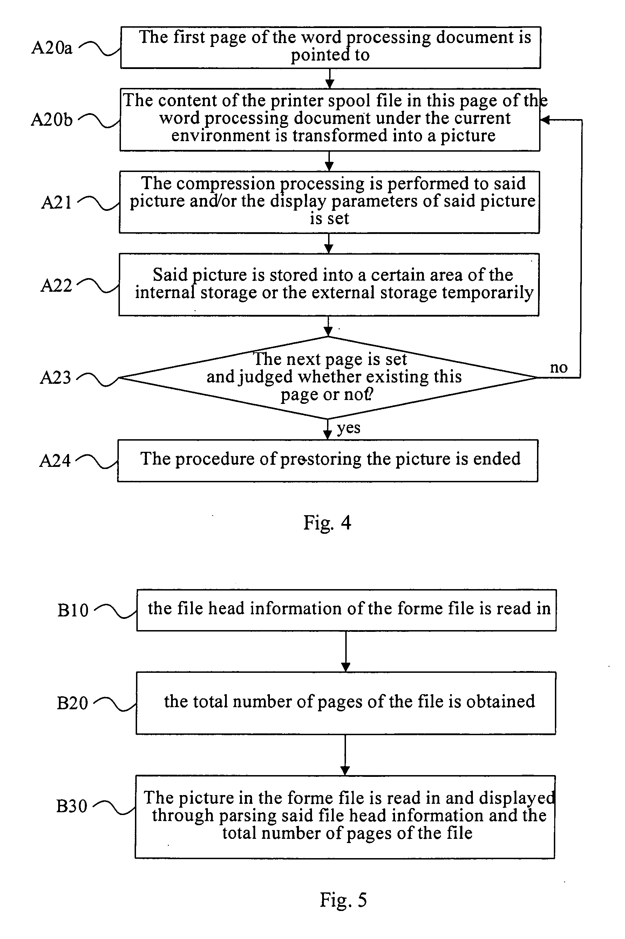

Fig.4 is a flowchart of pre-storing pictures in the forme file in accordance with the present invention, which concretely includes the following steps:

Step A20a, the first page of a word processing document is pointed to;

Step A20b, the content of the printer spool file in this page of the word processing document under the current environment is transformed into a picture;

Step A21, the compression processing is performed to said picture and/or the display parameters of said picture is set;

Step A22, said picture is stored into a certain area of the internal storage or the external storage temporarily;

Step A23, the next page is set and it is judged whether this page exists or not; if no, return to execute the step A20b; if yes, execute the step A24; and

Step A24, the procedure of pre-storing the picture is ended.

Fig.5 is a flowchart of the method for opening the computer forme file in accordance with the present invention, which includes the following steps:

Step B10, the file head information of the forme file is read in;

Step B20, the total number of pages of the file is obtained; and

Step B30, the picture in the forme file is read in and displayed through parsing said file head information and the total number of pages of the file.

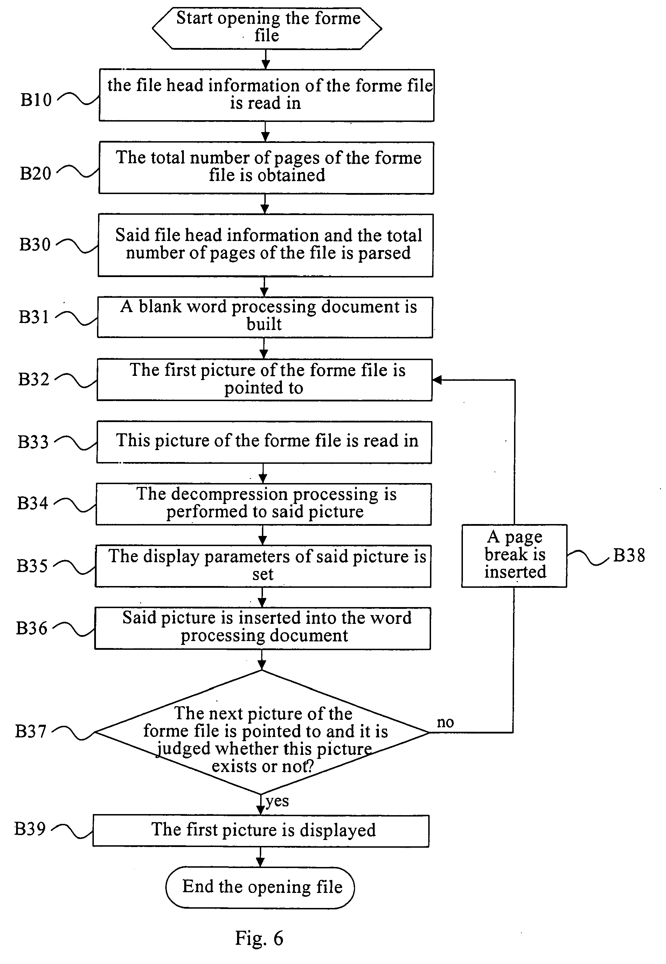

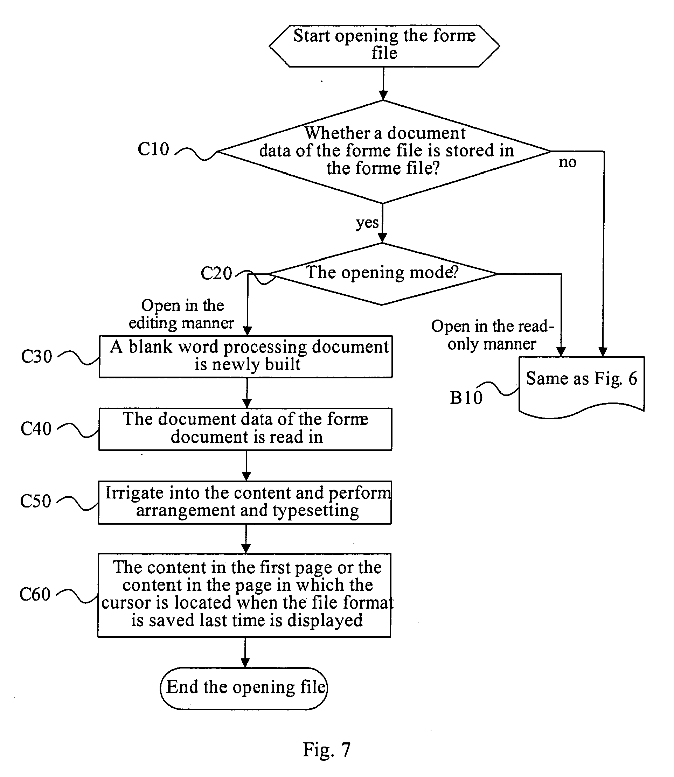

The method for opening the computer forme file in the present invention sufficiently utilizes the characteristic that the display and print effect of the picture format always keep consistent in the different operating system and different environment configuration, and through reading in and displaying the picture stored in the forme file, which provides an opening method which makes the forme file ensure displaying and printing in the same format simply and effectively. The present invention includes two kinds of the opening technical solutions. The opening mode one is to open the forme file in the read-only manner, while the opening mode two is to open the forme file in the editing manner. The concrete processing flows of the two kinds of the opening modes are shown in Fig.6 and Fig.7 respectively.

Fig.6 is a flowchart of opening mode one in the method for opening the computer forme file in accordance with the present invention, which concretely includes the following steps:

Step B10, the file head information of the forme file is read in;

Step B20, the total number of pages of the forme file is obtained;

Step B30, said file head information and the total number of pages of the file is parsed;

Step B31, a blank word processing document is built according to the corresponding information of the step B30;

Step B32, the first picture of the forme file is pointed to;

Step B33, this picture of the forme file is read in;

Step B34, the decompression processing is performed to said picture;

Step B35, the display parameters of said picture is set;

Step B36, said picture is inserted into the word processing document;

Step B37, the next picture of the forme file is pointed to and it is judged whether this picture exists or not; if yes, execute the step B39; if no, execute the step B38;

Step B38, a page break is inserted and the step B33 is executed; and

Step B39, the first picture is displayed.

Through the processing of the steps B10-B39, the picture and the necessary file information is read in fully and the consistency with the original format is implemented. It should be pointed out that, in the step B30 shown in the Fig.5, many kinds of the modes can be adopted to read in and display the picture in the forme file. The picture can be either displayed directly in the picture format or can be loaded into the corresponding document to be displayed out as a picture object of the document In the preferred technical solution as shown in Fig.6, the present invention adopts the read in and display mode in which the picture of the forme file is loaded into the word processing document. The word processing document built in the step B31 is the document type to which the forme file corresponds before it is transformed. This mode of reading in puts said picture in the same running environment to make it is provided with the more intuitionistic effect. Apparently, this opening mode is a read-only manner only for browsing, consulting and printing without editing the format content, but the area outside the format can be edited, for example, inserting a postil, an electronic seal and so on.

In the preferred technical solution as shown in Fig.6, considering the different requirements to the display and print effect, the present invention setups the steps B34 and B35 to perform the decompression processing to the picture read in and set the display parameters, so as to provide the more abundant selections to the users furthest. The processing procedure of the step B34 is basically the reverse procedure of the step A21 in Fig.2. The step B35 can make said picture display and print in the form of multicolor, black and white, grey scale or watermark.

In the preferred technical solution as shown in Fig.6, in the opening procedure of the forme file, the other information appended by the format information also can be read in at the same time, so as to provide data for the users to perform the operation of browsing and looking up followed by. The content stored in said forme file attribute in the form of plain text may be read in. Specifically speaking, the content of the plain text is read in from a field "remark" of the forme file attribute to be convenient for the users to search the content of the forme file. Each page of the zoom out images of the forme file may be read in, so that the users can look up and locate the page number of the forme file conveniently and rapidly by each page of the zoom out images. Further more, when the forme file is opened, whether the reader of the forme file is appended in the forme file may be detected. If yes, said reader of the forme file can run and the picture in said forme file is loaded into said reader of the forme file. Said reader of the forme file can be the picture reader is capable of being embedded into the web pages to run to implement opening the forme file directly under the web page environment. Therefore, the preferred solution provides a super-excellence method for using the forme file in the Internet and extends the application field of the present invention. The above processing procedures have certain independence. They can either be joined into the flow as shown in Fig.6 respectively, or be joined into the processing flow for opening the forme file in the present invention with any combination and any order.

In the concrete flow for opening the forme file as shown in Fig.6, in the step B36, the inserted picture may be set as "floating above the words", and in the step B39, the document may be set as read-only status.

Fig.7 is a flowchart of opening mode two in the method for opening the computer forme file in accordance with the present invention, which concretely includes the following steps:

Step C10, it is detected whether a document data of the forme file is stored in the forme file; if no, the step B10 is executed directly; if yes, the step C20 is executed;

Step C20, the opening mode is confirmed; if the forme file is opened in the editing manner, the step C30 is executed; if the forme file is opened in the read-only manner, the step B10 is executed;

Step C30, a blank word processing document is newly built;

Step C40, the document data of the forme file is read in;

Step C50, said document data is irrigated into said word processing document in a general manner, and is performed arrangement and typesetting; and

Step C60, the content in the first page or the content in the page in which the cursor is located when the file format is saved last time is displayed.

The step B10 is the step of reading in the file head information of the forme file as shown in the Fig.6, i.e. the forme file is opened in the read-only manner. The technical solution can make the users adopt two modes to open the forme file, and is the extension of the method for opening the forme file in the present invention. When the forme file is opened by adopting the editing manner, in this opening mode, only the document data of the forme file is read in. Said document data is irrigated into the document according to the standard typeset flow and is performed typesetting and displaying the content. The users can edit the word or the object discretionarily. When the forme file is opened by adopting the read-only manner, the technical solution is the same as Fig.6 shown, and unnecessary details are no longer given herein.

In the same way, in the opening manner as shown in Fig.7, the reading and displaying of said document data also may be implemented by adopting many kinds of the modes, and the technical solution in Fig.7 is only one of the modes. Actually, the mode in which the software of Word Process is loaded and the document data is opened by said software of Word Process directly may also be adopted, herein no longer explaining one after another.

It should be understood that the above embodiments are only used to explain, but not to limit the technical solution of the present invention. In despite of describing the present invention in detail with reference to the preferred embodiments, it should be understood that various modifications, changes or equivalent replacements could be made by an ordinary person skilled in the relevant field without departing from the spirit and scope of the technical solution of the present invention, which should be covered in the extent of the claims of the present invention.

## Claims

1. A method for generating a computer forme file, comprising:
Step A20, transforming a content of a printer spool file of a word processing document under the current environment into a picture;
Step A30, generating forme file information which describes correlative information including the quantity, the format and the storage position of the picture; and
Step A40, encapsulating said picture and said forme file information into a forme file.

2. The method according to claim 1, wherein the step A20 concretely comprises transforming each page of the content of the printer spool file of the word processing document under the current environment into each corresponding page of pictures.

3. The method according to claim 1, wherein the step A20 concretely comprises transforming the entire content of the printer spool file of the word processing document under the current environment into one picture.

4. The method according to claim 1, wherein the forme file information in the step A30 comprises file head information storing the corresponding information including the size, the format, the identification and the storage position of the picture, and information of the total number of pages which reflects the size of the forme file.

5. The method according to claim 1, wherein between the steps A20 and A30, the method further comprises a step of performing a compression processing on said pictures and/or setting display parameters of said picture so as to store said picture in the form of multicolor, black and white, grey scale or watermark.

6. The method according to any one of claims 1-5, further comprising a step of counting the total number of pages of the word processing document so as to rapidly generate the information of the total number of pages.

7. The method according to any one of claims 1-5, further comprising a step of setting an attribute description area of the forme file and meanwhile storing word content for searching the content of the forme file in said attribute description area in the form of plain text.

8. The method according to any one of claims 1-5, further comprising a step of setting a zoom out image description area of the forme file and meanwhile transforming said picture into each page of zoom out images for searching the page number of the forme file and storing the zoom out images in the zoom out image description area.

9. The method according to any one of claims 1-5, further comprising a step of encapsulating and storing a reader of the forme file capable of being embedded in the web pages to run into the forme file.

10. The method according to any one of claims 1-5, further comprising a step of storing a data content of said word processing document as a document data of the forme file.

11. A method for opening a computer forme file, comprising:
Step B10, reading in file head information of the forme file;
Step B20, obtaining the total number of pages of the file; and
Step B30, reading in and displaying a picture in a forme file through parsing said file head information and the total number of pages of the file.

12. The method according to claim 11, wherein reading in the picture in the forme file in the step B30 further comprises a step of performing a decompression processing on said picture.

13. The method according to claim 11, wherein displaying the picture in the forme file in the step B30 further comprises a step of setting display parameters of said picture so as to make said picture be displayed in the form of multicolor, black and white, grey scale or watermark.

14. The method according to claim 11, further comprising a step of reading in each page of zoom out images for searching page number in a zoom out image description area of said forme file.

15. The method according to any one of claims 11-14, further comprising a step of detecting whether a reader of the forme file is appended in the forme file, if yes, operation said reader of the format document, and loading the picture in said forme file into said reader of the forme file.

16. The method according to any one of claims 11-14, further comprising a step of detecting whether document data of the forme file are stored in the forme file, if yes, opening instructions of the forme file in the editing manner, and executing the following steps:
Step C30, building a blank word processing document newly;
Step C40, read in the document data of the forme file; and
Step C50, inputting the document data into said word processing document and performing an arrangement and a typesetting.
